# EUROPEAN PATENT SPECIFICATION

(11) **EP 0 483 929 B1**
(45) Date of publication and mention of the grant of the patent: **25.01.1995**
(21) Application number: 91202815.6
(22) Date of filing: 30.10.1991
(51) Int. Cl.: A23N 17/00, A23K 3/03, A23K 1/10

(54) **Device for the valorisation of slaughter residues**
Vorrichtung zur Verwertung von Schlachtabfällen
Dispositif pour la valorisation de déchets d'abattoir

(30) Priority: 01.11.1990 NL 9002384
(43) Date of publication of application: 06.05.1992
(73) Proprietor: STORK PMT B.V., 5831 AV Boxmeer (NL)
(72) Inventor: Witte, Johan Frederik, NL-5827 AX Vortum Mullem (NL)
(74) Representative: van der Kloet-Dorleijn, Geertruida W.F., Drs.

(56) References cited:
- DE-A- 1 802 140
- DE-A- 3 841 928
- GB-A- 1 547 063
- NL-A- 8 403 620

## Description

The invention relates to a device for the valorisation of slaughter residues in a continuous manner, which comprises in succession
- at least one grinding device for finely grinding said residues,
- at least one pumping means for pumping the obtained finely ground material,
- heating means for heating the finely ground material,
- means for keeping the material conditioned by heat treatment at an approximately constant temperature and pressure,
- cooling means for cooling the material,
- at least one container for the fermentation of the material, and
- injector means for injecting a starter culture for starting the fermentation.

Such a device is known from NL-A-84.03620. More specifically this reference discloses an enzymatic treatment with proteolytic enzymes of a fine, particulate suspension, obtained by comminution of slaughter residues, whereafter the suspension is passed to a continuous sterilisator. During the treatment, special measures directed to prevent supply of air from the outside to the product to be treated are missing.

It is pointed out that in the description which follows the term "slaughter residues" covers not only the parts obtained during the slaughter of animals which are known as waste, such as intestines, sludge water, and in the case of poultry pretreated or untreated feathers, but also blood or whole animals such as chickens or pieces of meat remaining from any processing operation.

Applicant now found that deterioration of the slaughter residues can be prevented by treating the residues in the absence of air, that is to say, apart from the air which may enter the device through the inlet of the pumping means.

The invention thus relates to a device of the above-indicated type which is characterized in that it further comprises an airtight conveying system through which the material is conveyed from the pumping means through the heating means, the means for keeping the material conditioned and the cooling means prior to delivery in the fermentation tank.

According to a method known from Dutch Patent Application 7,413,734, the starting material consisting of meat or meat waste is finely ground and subjected to fermentation in the presence of a suitable type of bacterium, fermentable carbohydrate and organic acid. The material thus fermented is subsequently mixed with a binding agent to form a dough with fibrous structure which is baked.

The disadvantage of this known method is that it is discontinuous and therefore cannot be connected to an existing continuous slaughter line. Besides, in practice only waste which is essentially free from bones and feathers can be processed.

It is remarked that the present device is preferably of the closed type, i.e. that the treatment of slaughter residues can take place without extra supply of air. A closed device is preferred because it will assist in the creation of an oxygen-free system, which is especially preferred in an anaerobic fermentation step to be carried out in the fermentation container.

Moreover, it is preferred that the material to be treated is transported through an at least partially tube-like system, so that the residence time of the material in each point of this tube-like system can easily be controlled. Of course, this tube-like part must not show any hindrances for the transport of the material.

It is pointed out that in the grinding device(s) the slaughter residues, which can be composed of, for example, chicken legs, chicken heads, feathers, blood, intestines, sludge water etc., are finely ground in such a way that a still fluid and transportable slurry is produced. If desired, additional water is added in order to obtain the correct consistency.

A pumping device is expediently present downstream of the grinding device(s) for pumping the now fluid, transportable material. In order to be able to guarantee an end product of the same quality, the grinding device and/or the pump are provided with a crusher plate with suitable apertures, preferably measuring 3 - 20 mm, in particular approximately 5 mm. Such provisions are generally known to the expert.

A metering device for adding acid is preferably present in the device, upstream of the heating devices. This metering in an expedient embodiment is regulated by means of flow velocity meters which are preferably fitted downstream of the pumping device.

The device according to the invention also comprises heating means for heating the finely ground material, which heating means preferably comprise means for regulating the temperature. The material is preferably heated in this section of the device to a temperature at which coagulation of protein takes place, enzymes are rendered inactive and most micro-organisms are destroyed, expediently at approx. 70 to 100°C. Although the residence time of the material in this heating section is not very critical, a period of 2 to 3 minutes will generally be sufficient.

Connecting to these heating means, the device has means for keeping the material fed through essentially conditioned. More particularly, these means ensure that the material fed through is held at an approximately constant temperature and pressure.

The device preferably comprises means for measuring and regulating the temperature in the means for keeping the material conditioned, and means for regulating the residence time in said material conditioning means. It will be clear to the expert that in an expedient embodiment the residence time regulating means can interact with the pumping means. It is pointed out that with the use of the present device for the valorisation of slaughter residues of various kinds of livestock a residence time of approximately 1 to 20 min. at a temperature of 70 to 100°C was found to be particularly effective.

It is pointed out that these conditioning means were found to be very vital for obtaining a good and useful end product.

The device according to the invention also contains at least one mixing device, preferably a static mixing device, in any desired place. The use of one or more mixing devices ensures the formation of a homogeneous mixture both as regards composition and as regards temperature distribution, which is particularly advantageous for the fermentation to be carried out later.

Mixing devices can be present at any point downstream of the grinding devices and upstream of the fermentation device. According to a particularly expedient embodiment, static mixing devices are integrated in the heating means and/or the cooling means, in such a way that the heating means and/or the cooling means comprise various heating or cooling units between which a mixing device is always fitted.

As already stated, the present invention also comprises means for cooling the material. The treated material can thereby be brought to a temperature which is preferably lower than 35°C, more particularly approximately 30°C.

After the material is sufficiently cooled down, a starter culture is added to it by means of at least one injector, for the purpose of initiating the fermentation which occurs in a subsequent fermentation container. Although the fermentation time depends on the temperature and the micro-organisms selected for the fermentation, a fermentation time of approximately 2 to 3 days is generally sufficient. The fermentation is preferably carried out under anaerobic conditions and the container is adapted for the purpose.

In an embodiment which has proved efficient in practice the device is also provided with means for the addition of a nutrient medium consisting of fermentable carbohydrates. These means are then preferably located upstream of the heating unit. The presence of fermentable carbohydrates promotes the growth of the starter culture.

Lactic acid bacteria such as Lactobacillus plantarum, Lactobacillus acidophylus and Lactococcus lactus are preferably used for the fermentation.

The fermentation container is preferably provided with means for continuously turning over the material to be fermented. Such means can in particular be means for stirring the material, for example, a propeller stirrer.

According to a very expedient embodiment, material for fermentation present in the fermentation container is, however, continuously turned over through the fact that means are present for rotating the container itself, for example by means of a roller bench, or by making the container rotate by rotating its shaft.

According to another expedient embodiment, the fermentation container is provided with a band screw, which embodiment is particularly suitable in the case of continuous fermentation.

The fermentation container is also preferably provided with means for regulating the temperature in the fermentation container. Such means comprise in particular means for cooling the material to be fermented, in order to discharge the heat released during the fermentation.

It is possible with the device according to the invention to make a more useful product of slaughter residues which were hitherto essentially processed in another way. The products obtained through treatment in the present device can be fed as such, i.e. in bulk form, as a valuable feed product to animals such as cattle, pigs, fur-bearing animals such as mink, poultry such as chickens, or pets such as dogs, cats etc. The product obtained is a thick slurry. It is, however, also possible to use the products obtained as the raw material for further processing.

For example, it is possible to sterilize the slurry obtained, and to dry and possibly further grind it to a product in powder form which is easy to pack and transport.

The invention will be explained in greater detail below with reference to the appended drawing, in which:
Fig. 1 shows schematically the various treatment units of the device according to the invention;
Fig. 2 shows schematically a longitudinal section through a static mixing device which can be incorporated in the device according to the invention if desired;
Fig. 3 shows schematically a longitudinal section through a fermentation container which is preferably used in the device according to the invention; and
Fig. 4 shows another fermentation container which can be used in the device according to the invention.

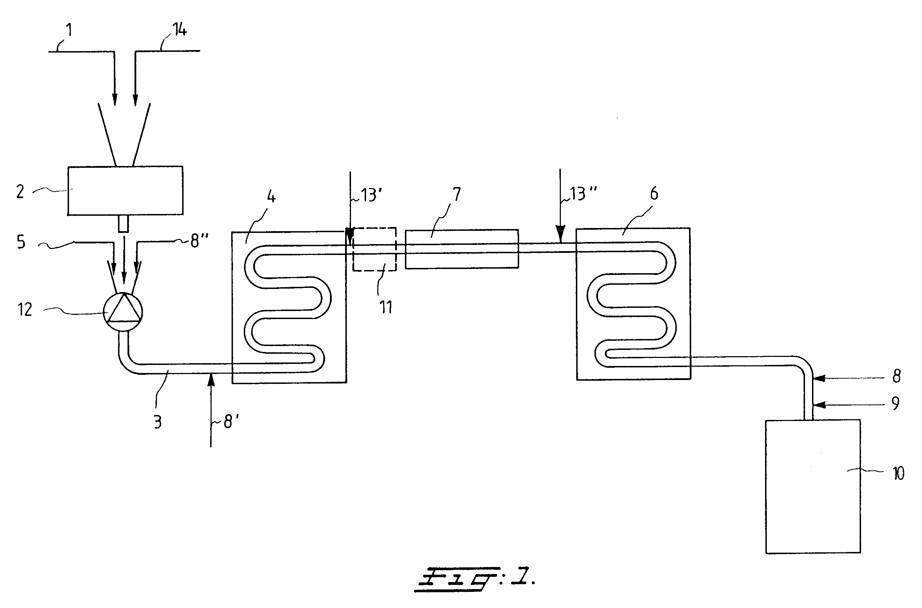

As shown in Fig. 1, the slaughter residues are supplied through pipe 1. This supply takes place by means of a supply system with conveyor screws. Of course, this system can be such that various types of slaughter residues are conveyed. These residues are then ground in a grinding device indicated by 2. Said grinding device is preferably provided with a crusher plate, so that the slurry to be conveyed further contains particles of a certain maximum size. In practice, a crusher plate with apertures measuring approximately 5 mm has been found to be very expedient. If desired, acid is added through pipe 14 from a metering device which is not shown. This addition of acid can, however, also take place downstream of grinding device 2. It is pointed out that acetic acid or peptic acid are the acids preferably used. Through this addition of acid a more favourable environment is produced for the fermentation, as a result of which the latter will take place faster.

The regulation of the acid metering device expediently takes place by means of flow velocity meters which are accommodated in pipe 3. More liquid slaughter residues such as blood or possibly water can be added through schematically shown pipe 5 to the finely ground material thus obtained. The material formed is subsequently pumped by means of pumping device 12. The slurry of finely ground slaughter residues is then conveyed via pipe 3 through device 4, in which the slurry is heated, preferably to a temperature of 70 to 100°C. In order to prevent the temperature of the material fed through from becoming too high, said heating unit is provided with means for regulating the temperature of the material to be passed through. The heating of the material is preferably carried out indirectly, i.e. by means of heat exchange with a medium suitable for the purpose. The heating can, however, also be direct, such as through injection of steam.

After the heating device 4, the material is conveyed through a conditioning unit 7, in which the material is held for a period of preferably 1 - 20 min. at a temperature of 70 - 100°C. The residence time of the material in this unit is preferably regulated by means of the pumping speed of the pump present in grinding device 2. Otherwise, the residence time and the temperature are determined depending on the starting material, the purpose for which the fermented product is to be used and the maximum temperature applied in heating device 4. In connection with this, probes 13' and 13'' are present at the outlet of heating device 4 and cooling device 6 for measuring the temperature of the material passed through.

Preferably the material is conveyed through a tube in at least a part of the device, which tube may be shaped as indicated schematically in fig. 1, but of course may not have any dead parts, so that the velocity of the material can be controlled, as desired.

Expediently, the present device is closed, so that an anaerobic fermentation can be carried out in the fermentation container.

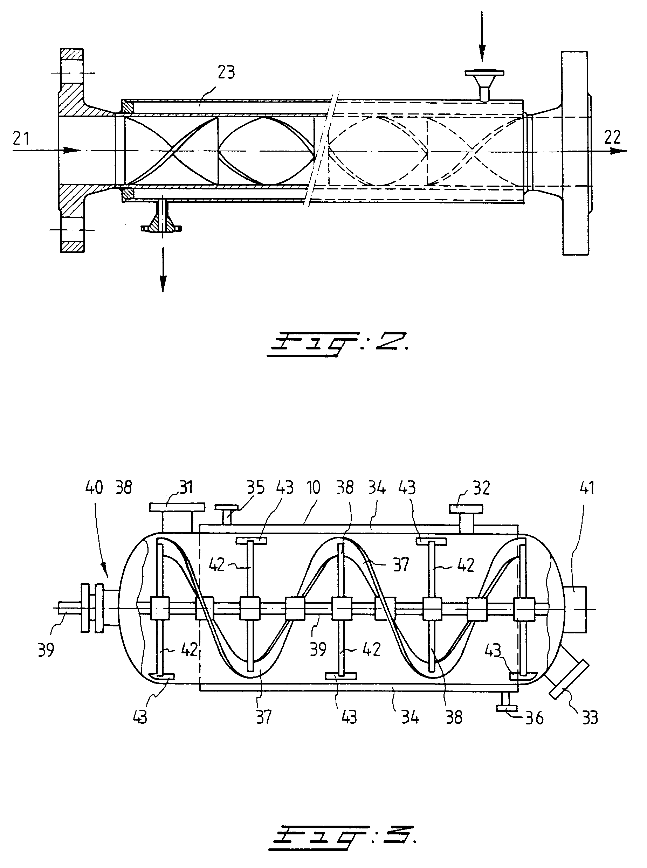

If desired, a static mixer 11 can be placed between heating device 4 and conditioning unit 7. Such a mixer is shown schematically in longitudinal section in Fig. 2. The material to be treated is fed through inlet aperture 21 to the mixer and is discharged through outlet 22. The temperature in the mixer can be regulated by means of a cooling medium which is circulated through the jacket 23 of the mixer. Moreover, the position of the static mixer is not restricted to the position shown here. A static mixer can essentially be installed at any point in the chain; but one or more static mixers are preferably provided in the heating device 4. Of course, means are provided for measuring the temperature of the material passed through, in conditioning device 7, which means interact with the material pumping means and the heating device, and possibly the cooling device, in connection with the inflow velocity and the temperature of the material.

Downstream of the conditioning unit 7 is a device 6 for cooling the material coming out of unit 7. This cooling preferably takes place through heat exchange in countercurrent to a cooling medium, preferably to a temperature which is lower than 35°C, in particular approximately 30°C. In the same way as in the heating device 4, one or more mixing devices, preferably static mixers, can be incorporated in the cooling device 6. A starter culture of lactic acid bacteria is then injected by means of injector 9 into the slurry thus cooled, and the slurry obtained is fed into fermentation tank 10 for fermentation of the slurry. This fermentation generally takes approximately 2 to 3 days, and preferably takes place in anaerobic conditions.

If desired, a fermentable nutrient medium can be added via pipe 8 from a metering device not shown to the cooled slurry coming out of unit 6. This nutrient medium is preferably molasses or dextrose. This nutrient medium can also be added at any desired place in the process, as shown, for example, by 8' and 8'' as alternative possibilities.

The fermentation container 10 is preferably provided with means for continuously turning over the material to be fermented.

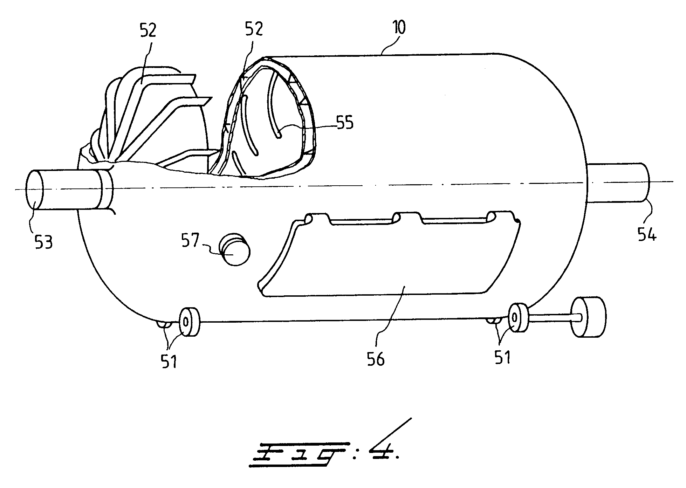

Fig. 3 shows a fermentation container which is particularly preferable. Container 10 is here an essentially cylindrical container with a horizontal axis. The material for fermentation is fed in through inlet 31. The container 10 is also provided with an inlet 32 for feeding in an inert gas for the fermentation if it is desired that the fermentation should be carried out anaerobically. After treatment, the mixture can be discharged through outlet 33.

Container 10 also has a cooling device 34 which is, for example, a liquid cooling unit with an inlet 35 and an outlet 36. The container also has a stirring and scraping element which in the example shown consists of a band screw 37 which is fixed by means of bars 38 to a shaft 39 which is situated on the axis of container 10 and is rotatably mounted in bearings 40 and 41 which are driven outside container 10 by a motor (not shown). The external diameter of the band screw 37 is essentially equal to the internal diameter of the cylindrical container 10. Jamming elements 43 are also provided by means of bars 42 on the shaft 39.

The mixture to be fermented can be fed continuously into container 10 and is cooled by means of cooling unit 34. The shaft 39 of the stirring means 37, 43 is driven simultaneously.

Fig. 4 shows schematically and partially cut away another embodiment of a fermentation container 10.

This embodiment differs from the embodiment shown in Fig. 3 in that the container is rotated by means of rollers 51. The material is fermented in batches in this container. The container is filled through aperture 57 and, on completion of the fermentation, is also emptied through aperture 57. An inspection hatch 56 is present to permit observation of the fermentation stage. By means of this hatch it is also possible to clean the container internally after a fermentation treatment. In order to ensure that the material present is turned over thoroughly during the rotation of the container, container 10 is provided with vanes 55. Container 10 is also double-walled; a cooling liquid can be conveyed through the fins 52 present in the jacket, being fed in through pipe 53 and discharged through pipe 54. Of course, it is also possible to carry out the cooling through the whole jacket.

Although only one fermentation container is shown in Fig. 1, several fermentation containers can, of course, be present.

It will be clear to the expert that, for example, a propeller stirrer can also be used as the mixing device.

Although this is not shown any further, the regulation of the quantity of material supplied to the crusher plate of grinding device 2 can be carried out by means of level gauges in the grinding device and the infeed nozzle of pump 12.

Finally, it is pointed out that in the device according to the invention the conditions can be set in such a way that autolysis of the product is unlikely or impossible; this means that a valuable feed product for various types of animals can be obtained continuously.

## Claims

1. A device for the valorisation of slaughter residues in a continuous manner, which comprises in succession:
- at least one grinding device (2) for finely grinding said residues,
- at least one pumping means (12) for pumping the obtained finely ground material,
- heating means (4) for heating the finely ground material,
- means (7) for keeping the material conditioned by heat treatment at an approximately constant temperature and pressure,
- cooling means (6) for cooling the material,
- at least one container (10) for the fermentation of the material,
- injector means (9) for injecting a starter culture for starting the fermentation,
characterised in that it further comprises an airtight conveying system (3) through which the material is conveyed from the pumping means (12) through the heating means (4), the means (7) for keeping the material conditioned and the cooling means (6) prior to delivery in the fermentation tank (10).

2. A device according to claim 1, characterised in that said airtight conveying system (3) is a tube-like conveying system.

3. A device according to claims 1 or 2, characterised in that a metering device for adding acid is connected with the airtight conveying system (3) before said heating means (4).

4. A device according to claims 1 to 3, **characterised in that** said device comprises means (13', 13'') for measuring and regulating the temperature in the means (7) for keeping the material conditioned.

5. A device according to claims 1 to 4, **characterised in that** the device also comprises at least one mixing device, preferably a static mixing device (11), in any desired place.

6. A device according to claims 1 to 5, **characterised in that** between the cooling means (16) and the injector (9) for injecting a starter culture, means (8) for the addition of a fermentable nutrient medium are provided.

7. A device according to claims 1 to 6, **characterised in that** the fermentation container (10) is provided with means for supply of inert gas.

8. A device according to claims 1 to 7, **characterised in that** said cooling means (6), cool the material to a temperature lower than 35 °C, preferably to about 30 °C.

9. A device according to claims 1 to 8, **characterised in that** the fermentation container (10) is provided with means for continuously turning over the material to be fermented.

10. A device according to claims 1 to 9, **characterised in that** the fermentation container (10) is also provided with means for regulating the temperature in the fermentation container (10).

## Patentansprüche

1. Vorrichtung zur Verwertung von Schlachtabfällen in kontinuierlicher Weise, die aufeinanderfolgend aufweist:
- mindestens eine Schleifvorrichtung (2), um die Abfälle fein zu schleifen,
- mindestens eine Pumpeinrichtung (12), um das erhaltene, fein geschliffene Material zu pumpen,
- eine Erhitzungseinrichtung (4), um das fein geschliffene Material zu erhitzen,
- eine Einrichtung (7), um das durch Hitzebehandlung konditionierte Material auf annähernd konstanter Temperatur und Druck zu halten,
- eine Kühleinrichtung (6), um das Material zu kühlen,
- mindestens einen Behälter (10) zur Fermentation des Materials,
- eine Injektionseinrichtung (9), um eine Starterkultur zum Starten der Fermentation zu injizieren,
dadurch gekennzeichnet, daß die Vorrichtung außerdem ein luftdichtes Fördersystem (3) aufweist, durch welches das Material von der Pumpeinrichtung (12) durch die Erhitzungseinrichtung (4), die Einrichtung (7), die das Material konditioniert hält, und die Kühleinrichtung (6) vor der Abgabe in den Fermentationstank (10) gefördert wird.

2. Vorrichtung nach Anspruch 1, dadurch gekennzeichnet, daß das luftdichte Fördersystem (3) ein rohrartiges Fördersystem ist.

3. Vorrichtung nach Anspruch 1 oder 2, dadurch gekennzeichnet, daß eine Dosiereinrichtung zur Zugabe von Säure mit dem luftdichten Fördersystem (3) vor der Erhitzungseinrichtung (4) verbunden ist.

4. Vorrichtung nach Ansprüchen 1 bis 3, dadurch gekennzeichnet, daß die Vorrichtung Einrichtungen (13', 13'') aufweist, um die Temperatur in der Einrichtung (7), die das Material konditioniert hält, zu messen und zu regeln.

5. Vorrichtung nach Ansprüchen 1 bis 4, dadurch gekennzeichnet, daß die Vorrichtung auch mindestens eine Mischvorrichtung an einer beliebigen Stelle aufweist, vorzugsweise eine statische Mischvorrichtung (11).

6. Vorrichtung nach Ansprüchen 1 bis 5, dadurch gekennzeichnet, daß zwischen der Kühleinrichtung (6) und dem Injektor (9) zum Injizieren einer Starterkultur eine Einrichtung (8) zur Zugabe eines fermentierbaren Nährstoffs vorgesehen ist.

7. Vorrichtung nach Ansprüchen 1 bis 6, dadurch gekennzeichnet, daß der Fermentationsbehälter (10) mit einer Einrichtung zur Zufuhr von Inertgas versehen ist.

8. Vorrichtung nach Ansprüchen 1 bis 7, dadurch gekennzeichnet, daß die Kühleinrichtung (6) das Material auf eine Temperatur unter 35°C kühlt, vorzugsweise auf ungefähr 30°C.

9. Vorrichtung nach Ansprüchen 1 bis 8, dadurch gekennzeichnet, daß der Fermentationsbehälter (10) mit einer Einrichtung versehen ist, um das zu fermentierende Material kontinuierlich umzuwälzen.

10. Vorrichtung nach Ansprüchen 1 bis 9, dadurch gekennzeichnet, daß der Fermentationsbehälter (10) auch mit einer Einrichtung versehen ist, um die Temperatur in dem Fermentationsbehälter (10) zu regeln.

## Revendications

1. Dispositif pour la valorisation de déchets d'abattoir d'une manière continue, lequel comporte successivement:
- au moins un dispositif de broyage (2) pour broyer finement lesdits déchets,
- au moins un moyen de pompage (12) pour pomper la matière finement broyée obtenue,
- un moyen de chauffage (4) pour chauffer la matière finement broyée,
- des moyens (7) pour maintenir à une température et une pression approximativement constantes la matière conditionnée par traitement thermique,
- un moyen de refroidissement (6) pour refroidir la matière,
- au moins une cuve (10) pour la fermentation de la matière, et
- un moyen d'injection (9) pour injecter une culture d'amorçage afin d'amorcer la fermentation,
caractérisé en ce qu'il comporte en outre un système d'acheminement (3) étanche à l'air par l'intermédiaire duquel la matière circule depuis le moyen de pompage (12) via le moyen de chauffage (4), le moyen (7) pour maintenir la matière conditionnée et le moyen de refroidissement (6) avant l'envoi dans la cuve de fermentation (10).

2. Dispositif selon la revendication 1, caractérisé en ce que ledit système d'acheminement (3) étanche à l'air est un système d'acheminement analogue à un tube.

3. Dispositif selon la revendication 1 ou 2, caractérisé en ce qu'un dispositif de dosage pour ajouter de l'acide est relié au système d'acheminement (3) étanche à l'air avant ledit moyen de chauffage (4).

4. Dispositif selon les revendications 1 à 3, caractérisé en ce que ledit dispositif comporte des moyens (13', 13'') pour mesurer et régler la température dans le moyen (7) afin de maintenir le conditionnement de la matière.

5. Dispositif selon les revendications 1 à 4, caractérisé en ce que le dispositif comporte également au moins un dispositif mélangeur, de préférence un dispositif mélangeur statique (11), installé à n'importe quel endroit voulu.

6. Dispositif selon les revendications 1 à 5, caractérisé en ce qu'entre le moyen de refroidissement (6) et l'injecteur (9) pour l'injection d'une culture d'amorçage, des moyens (8) d'apport de nutriments fermentables sont disposés.

7. Dispositif selon les revendications 1 à 6, caractérisé en ce que la cuve de fermentation (10) comporte un moyen d'alimentation en gaz inerte.

8. Dispositif selon les revendications 1 à 7, caractérisé en ce que ledit moyen de refroidissement (6) refroidit la matière à une température inférieure à 35°C, de préférence à environ 30°C.

9. Dispositif selon les revendications 1 à 8, caractérisé en ce que la cuve de fermentation (10) comporte des moyens pour retourner d'une manière continue la matière mise à fermenter.

10. Dispositif selon les revendications 1 à 9, caractérisé en ce que la cuve de fermentation (10) comporte également des moyens pour réguler la température dans la cuve de fermentation (10).
